# EUROPEAN PATENT APPLICATION

(11) **EP 3 346 533 A1**
(43) Date of publication of application: **11.07.2018**
(21) Application number: 16841923.2
(22) Date of filing: 31.08.2016
(51) Int. Cl.: H01M 8/04, H01M 8/0606, H01M 8/12

(54) **FUEL CELL MODULE AND FUEL CELL DEVICE**

(30) Priority: 31.08.2015 JP 2015170128
(71) Applicant: KYOCERA Corporation, Kyoto 612-8501 (JP)
(72) Inventor: SUEHIRO, Masanori, Kyoto-shi Kyoto 612-8501 (JP); KAWABATA, Naoki, Kyoto-shi Kyoto 612-8501 (JP); ODA, Tomoyuki, Kyoto-shi Kyoto 612-8501 (JP)
(74) Representative: Viering, Jentschura & Partner mbB Patent- und Rechtsanwälte
(86) International application number: PCT/JP2016/075564
(87) International publication number: WO 2017/038893

(57) **Abstract**

A fuel cell module according to the invention includes: a housing; cell stacks; a reformer; a gas supply section which supplies an oxygen-containing gas; heat insulators; and a burning section. The cell stacks are disposed in juxtaposition and each comprise fuel cells which each have a columnar shape and are arranged along a predetermined arrangement direction. The reformer is disposed above the cell stacks, and generates a fuel gas which is supplied to the fuel cells. The gas supply section is disposed between the adjacent cell stacks, and has a gas flow channel through which an oxygen-containing gas to be supplied to the fuel cell flows downwardly. The heat insulators are disposed on both end sides in an arrangement direction of the cell stacks so that the cell stacks are sandwiched between the heat insulators. The burning section lies in corresponding one of spaces each located between the cell stacks and the reformer. The fuel cell module further comprises a communicating portion which communicates between the adjacent spaces, the communicating portion being disposed in at least one end of each of the cell stacks in the predetermined arrangement direction so as to be surrounded with the gas supply section, the heat insulators, and the reformer.

## Description

### Technical Field

The present invention relates to a fuel cell module and a fuel cell apparatus.

### Background Art

In recent years, various types of fuel cell modules have been proposed as next-generation energy sources. The fuel cell module is constructed by placing, in a housing, a cell stack device comprising a cell stack composed of an array of a plurality of cells known as fuel cells. The fuel cell module is provided with a burning section for burning excess fuel gas discharged from the fuel cell, so that heat generated by burning operation can be utilized for heating of a reformer which induces a reforming reaction to generate hydrogen (refer to Patent Literature 1, for example).

### Citation List

### Patent Literature

Patent Literature 1: Japanese Unexamined Patent Publication JP-A 2013-191318

### Summary of Invention

A fuel cell module according to a present disclosure comprises: a housing; a plurality of cell stacks; a reformer; a gas supply section which supplies an oxygen-containing gas; heat insulators; and a burning section. The plurality of cell stacks are housed in the housing, the plurality of cell stacks being disposed in juxtaposition, each of which comprises a plurality of fuel cells which have a columnar shape and are arranged along a predetermined arrangement direction. The reformer is disposed above the cell stacks in the housing, and generates a fuel gas which is supplied to the fuel cells. The gas supply section is disposed between the adjacent cell stacks along the predetermined arrangement direction of the fuel cells so as to face the cell stacks and the reformer, and has a gas flow channel through which an oxygen-containing gas to be supplied to the fuel cell flows downwardly. The heat insulators are disposed on both end sides of the cell stacks in the predetermined arrangement direction so that the cell stacks are sandwiched between the heat insulators. The burning section lies in corresponding one of spaces each located between the cell stacks and the reformer, and burns excess fuel gas discharged from the fuel cell. Moreover, the fuel cell module according to the present disclosure further comprises a communicating portion which communicates between the adjacent spaces, the communicating portion being disposed in at least one end of each of the cell stacks in the predetermined arrangement direction so as to be surrounded with the gas supply section, the heat insulators, and the reformer.

A fuel cell apparatus according to the present disclosure comprises: the fuel cell module mentioned above; and an exterior case which houses therein the fuel cell module.

### Brief Description of Drawings

Other and further objects, features, and advantages of the invention will be more explicit from the following detailed description taken with reference to the drawings wherein:
FIG. 1 is a perspective view showing an example of a cell stack device comprising cell stacks which constitute a fuel cell module according to the present embodiment;
FIG. 2 shows the cell stack device shown in FIG. 1, wherein FIG. 2A is a side view of the cell stack device, and FIG. 2B is an enlarged sectional view of a part taken out of the construction shown in FIG. 2A, as viewed from above;
FIG. 3 is a perspective view showing an example of a fuel cell module according to the present embodiment;
FIG. 4 is a sectional view of the fuel cell module shown in FIG. 3;
FIG. 5 is a plan view of part of the fuel cell module shown in FIG. 4;
FIG. 6 is a sectional view showing another example of the fuel cell module according to the present embodiment;
FIG. 7 is a plan view of part of the fuel cell module shown in FIG. 6;
FIG. 8 is a side view of the oxygen-containing gas supply member of another example;
FIG. 9 shows the reformer taken out of the fuel cell module shown in FIG. 6 in which the reformer is housed, wherein FIG. 9A is a perspective view and FIG. 9B is a plan view;
FIG. 10 is a schematic view of an example of a construction in which the reformer shown in FIG. 9 is disposed above the cell stack device, as seen in the arrangement direction; and
FIG. 11 is a perspective view schematically showing an example of a fuel cell apparatus according to the present embodiment.

### Description of Embodiments

Hereinafter, a fuel cell module and a fuel cell apparatus according to a present embodiment will be described with reference to drawings. Note that the corresponding constituent components in each of the different drawings are identified by corresponding reference designations.

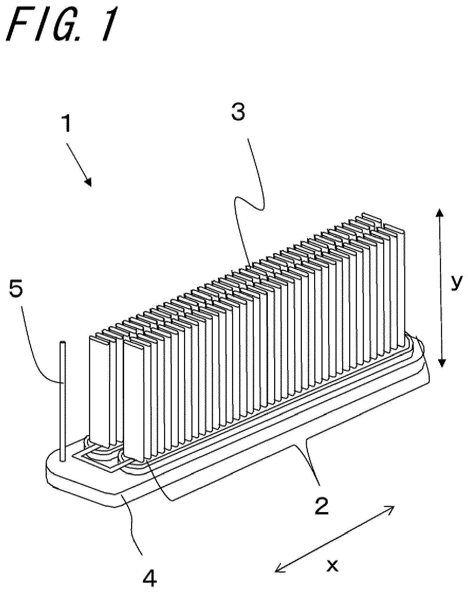

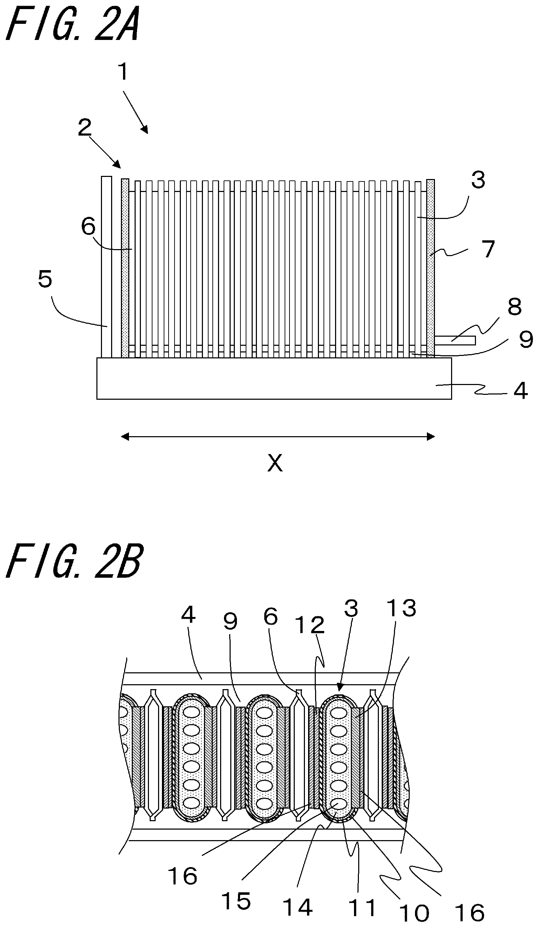

FIG. 1 is a perspective view showing an example of a cell stack device comprising cell stacks which constitute a fuel cell module according to the present embodiment. FIG. 2 shows the cell stack device shown in FIG. 1, wherein FIG. 2A is a side view of the cell stack device, and FIG. 2B is an enlarged sectional view of a part taken out of the construction shown in FIG. 2A, as viewed from above. Moreover, in the drawings to be hereafter referred to, as a cell, mainly a fuel cell in the form of a solid oxide cell will be described.

In the cell stack device 1 shown in FIGS. 1 and 2, two cell stacks 2 are provided in juxtaposition. The cell stack 2 is composed of upstanding fuel cells 3 arranged in an array along the arrangement direction of (X direction, as viewed in FIG. 1), the fuel cell 3 having an internal gas flow channel 15 through which a fuel gas is allowed to pass from one end to the other end. Moreover, the fuel cell 3 disposed adjacent each other in the X direction are electrically connected in series with each other via an electrically conductive member 6. In addition, the lower end of the fuel cell 3 is secured to a manifold 4 by an insulating adhesive 9.

In FIGS. 1 and 2, as the fuel cell 3, there is shown a solid-oxide fuel cell 3 of hollow flat type having a plurality of internal gas flow channels through which a fuel gas flows in a longitudinal direction thereof, the solid-oxide fuel cell 3 being constructed by laminating a fuel-side electrode layer 10, a solid electrolyte layer 11, and an air-side electrode layer 12 one after another in the order named on the surface of an electrically conductive support 14 having the gas flow channels. An oxygen-containing gas is allowed to pass between the fuel cells 3. The structure of the fuel cell 3 will be described later. In the fuel cell module according to the present embodiment, the fuel cell 3 may be shaped in, for example, a flat plate or a cylinder, and the form of the cell stack device 1 may be suitably changed in conformity to the form of the fuel cell 3.

Moreover, in the cell stack device 1, there is provided a cell stack support member 7 (which may hereafter be abbreviated as a stack support member 7) electrically connected via the electrically conductive member 6 to the outermost fuel cell 3 of the cell stack 2. The stack support member 7 may be externally provided with a protective cover. The protective cover protects the stack support member 7 and the cell stack 2 from contact with a heat insulator placed around the cell stack 2 or from external shock. Moreover, the stack support member 7 is connected with an electrically conductive portion 8 protruding outwardly in the arrangement direction of the cell stack 2.

Although the cell stack device 1 is illustrated as comprising two cell stacks 2 in FIGS. 1 and 2, the number of the cell stacks 2 may be changed on an as needed basis. For example, the cell stack device 1 may be composed of a single cell stack 2. Moreover, the cell stack device 1 may include a reformer which will hereafter be described.

Moreover, the manifold 4 comprises: a gas case having an opening in an upper surface thereof, which retains a fuel gas which is fed to the fuel cell 3; and a frame body inside of which the fuel cell 3 is fastened, the frame body being secured to the gas case.

One end (lower end, as viewed in FIG. 2) of the fuel cell 3 is surrounded by the frame body, and, the lower end of the fuel cell 3 is secured at an outer periphery thereof to the frame body via the insulating adhesive 9 set in a filled state inside the frame body. That is, the cell stack 2 is configured so that a plurality of fuel cells 3 are housed in the frame body while being arranged and are bonded to the frame body via the insulating adhesive 9. As the insulating adhesive 9, it is possible to use an adhesive made of glass, etc. to which a predetermined filler is added in consideration of a thermal expansion coefficient.

Moreover, connected to the upper surface of the manifold 4 is a gas passage tube 5 through which a fuel gas generated by a reformer which will hereafter be described flows. The fuel gas and water vapor are fed to the manifold 4 through the gas passage tube 5, and are then fed from the gas case of the manifold 4 to the gas flow channel 15 provided within the fuel cell 3.

As shown in FIG. 2B, the fuel cell 3 has the form of a column (hollow flat plate, for example) composed of the columnar electrically conductive support 14 (which may hereafter be abbreviated as the support 14) having a pair of opposed flat surfaces, on one of which the fuel-side electrode layer 10, the solid electrolyte layer 11, and the air-side electrode layer 12 are laminated one after another in the order named. Moreover, on the other one of the flat surfaces of the fuel cell 3, there is provided an interconnector 13 whose outer surface (upper surface) is provided with a P-type semiconductor layer 16. By connecting the electrically conductive member 6 to the interconnector 13 via the P-type semiconductor layer 16, it is possible to establish ohmic contact between the electrically conductive member 6 and the interconnector 13, and thereby reduce a drop in potential, wherefore deterioration in electricity collection capability can be avoided effectively. In FIG. 1, the electrically conductive member 6 and the stack support member 7 are omitted from the construction. Moreover, the support 14 may be configured to serve also as the fuel-side electrode layer 10, and, in this case, the cell can be constructed by successively laminating the solid electrolyte layer 11 and the air-side electrode layer 12 in the order named on the surface of the support 14.

The fuel-side electrode layer 10 may be formed of typical known materials, for example, porous electrically conductive ceramics such as ZrO₂ containing rare-earth element oxide in the form of solid solution (called stabilized zirconia, including partially-stabilized zirconia) and Ni, and/or NiO.

The solid electrolyte layer 11 is required to serve as an electrolyte for providing electron linkage between the fuel-side electrode layer 10 and the air-side electrode layer 12, and also to have a gas shutoff capability to prevent leakage of a fuel gas and an oxygen-containing gas, and is formed of ZrO₂ containing rare-earth element oxide in the form of solid solution in an amount of 3% to 15% by mole. Instead of ZrO₂, use can be made of other material which has the above-described characteristics.

The air-side electrode layer 12 may be formed of any material commonly used therefor without special limitations, for example, electrically conductive ceramics composed of so-called ABO₃ perovskite oxide. The air-side electrode layer 12 is required to exhibit gas permeability, and may be configured to have an open porosity of greater than or equal to 20%, or an open porosity in a range of 30% to 50%.

The support 14 has gas permeability to allow a fuel gas to permeate to the fuel-side electrode layer 10, and also has electrical conductivity for conduction of electricity via the interconnector 13. Thus, as the support 14, use can be formed of electrically conductive ceramics or cermet, for example. In producing the fuel cell 3, in the case where the support 14 is formed through co-firing with the fuel-side electrode layer 10 or the solid electrolyte layer 11, it is advisable to form the support 14 from an iron-group metal component and a specific rare earth oxide. Moreover, in the fuel cell 3 shown in FIG. 2, the columnar (hollow flat plate-shaped) support 14 has the form of an elongated plate-like piece extending in an upstanding direction (Y direction, as viewed in FIG. 1), and has flat opposite surfaces and semicircular opposite side faces. Moreover, in order to provide gas permeability, the support 14 may be configured to have an open porosity of greater than or equal to 30%, or an open porosity in a range of 35% to 50%, in particular. An electrical conductivity of the support 14 may be set to 300 S/cm or greater, or 440 S/cm or greater, in particular. Moreover, a shape of the support 14 may be a columnar shape, or may be a cylindrical shape.

Exemplary of the P-type semiconductor layer 16 is a layer formed of transition metal perovskite oxide. More specifically, it is possible to use a material which is greater in electron conductivity than the material of construction of the interconnector 13, for example, P-type semiconductor ceramics composed of at least one of LaMnO₃-based oxide having Mn, Fe, Co, etc. in the B-site, LaFeO₃-based oxide, LaCoO₃-based oxide, and the like. Under normal circumstances, a thickness of the P-type semiconductor layer 16 may be set to a range of 30 µm to 100 µm.

The interconnector 13 may be formed of lanthanum chromite-based perovskite oxide (LaCrO₃ oxide) or lanthanum strontium titanate-based perovskite oxide (LaSrTiO₃-baased oxide). Such a material has electrical conductivity, and undergoes neither reduction nor oxidation when exposed to a fuel gas (hydrogen-containing gas) and an oxygen-containing gas (air, etc.). Moreover, it is advisable to render the interconnector 13 dense in texture for prevention of leakage of a fuel gas flowing through the gas flow channel 15 formed in the support 14 and an oxygen-containing gas flowing outside the support 14, and hence, the interconnector 13 may have a relative density of 93% or above, or 95% or above, in particular.

The electrically conductive member 6 and the stack support member 7 interposed for electrically connecting the fuel cell 3 may be constructed of a member formed of an elastic metal or alloy, or a member obtained by performing a predetermined surface treatment on a felt made of metallic fiber or alloy fiber.

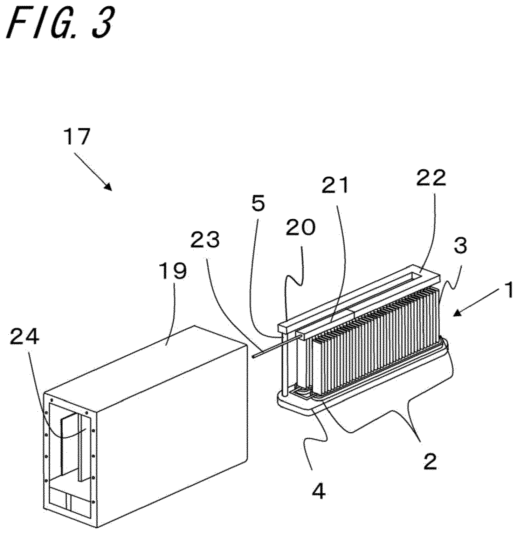

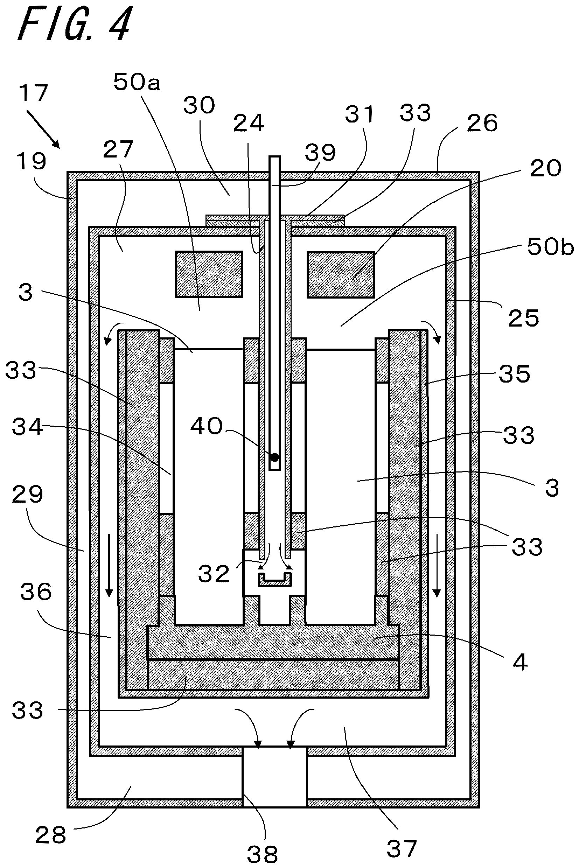

FIG. 3 is an exterior perspective view showing an example of a fuel cell module 17 comprising the cell stack device 1 according to the present embodiment, and, FIG. 4 is a sectional view of the fuel cell module.

In the fuel cell module 17 shown in FIG. 3, the cell stack device 1 according to the present embodiment is housed in a housing 19. Above the cell stack device 1, there is provided a reformer 20 which generates a fuel gas which is fed to the fuel cell 3.

The reformer 20 generates a fuel gas by reforming a raw fuel such as natural gas or kerosene delivered thereto via a raw fuel supply tube 23. The reformer 20 may be configured so that steam reforming under a reforming reaction with high reforming efficiency can be performed. The reformer 20 comprises: a vaporizing section 21 for vaporizing water; and a reforming section 22 provided with a reforming catalyst (not shown) for reforming a raw fuel into a fuel gas.

Moreover, in FIG. 3, there are shown the housing 19 with parts (front and rear surfaces) removed, and the internally housed cell stack device 1 in a state of lying just behind the housing 19. In the fuel cell module 17 shown in FIG. 3, the cell stack device 1 can be slidingly housed in the housing 19.

The housing 19 is internally provided with an oxygen-containing gas supply member 24. The oxygen-containing gas supply member 24 is interposed between the cell stacks 2 lying in juxtaposition on the manifold 4 to allow an oxygen-containing gas to flow between the fuel cells 3.

As shown in FIG. 4, the housing 19 constituting the fuel cell module 17 has a double-walled structure consisting of an inner wall 25 and an outer wall 26, wherein the outer wall 26 constitutes an outer frame of the housing 19, and the inner wall 25 defines a housing chamber 27 for housing therein the cell stack device 1.

The housing 19 is provided with an oxygen-containing gas introduction section 28 which serves as a first gas introduction section for introducing an oxygen-containing gas externally introduced into the housing chamber 27. After being introduced into the oxygen-containing gas introduction section 28, the oxygen-containing gas flows upwardly through an oxygen-containing gas passage section 29 defined by the inner wall 25 and the outer wall 26 corresponding to each side of the housing chamber 27, the oxygen-containing gas passage section 29 communicating with the oxygen-containing gas introduction section 28. The oxygen-containing gas subsequently flows through an oxygen-containing gas distributing section 30 defined by the inner wall 25 and the outer wall 26 corresponding the top of the housing chamber 27, the oxygen-containing gas distributing section 30 communicating with the oxygen-containing gas passage section 29. In the oxygen-containing gas distributing section 30, the oxygen-containing gas supply member 24 serving as a gas supply section is fixedly received so as to pass through the inner wall 25. The oxygen-containing gas supply member 24 has, at an upper end thereof, an oxygen-containing gas inlet (not shown) for entry of an oxygen-containing gas and a flange portion 31, and also has, at a lower end thereof, an oxygen-containing gas outlet 32 for introduce an oxygen-containing gas into the lower end of the fuel cell 3. Thus, the oxygen-containing gas distributing section 30 and the oxygen-containing gas supply member 24 are connected to each other. A heat insulator 33 is interposed between the flange portion 31 and the inner wall 25. The oxygen-containing gas supply member 24 is disposed along the arrangement direction of the fuel cells 3 so as to face the cell stack 2 and the reformer 20, and, the oxygen-containing gas flows downwardly through the interior of the oxygen-containing gas supply member 24.

Moreover, in the housing chamber 27, there is provided a heat insulator 33 on an as needed basis for maintaining the internal temperature of the fuel cell module 17 at a high-temperature level to prevent a reduction in the amount of electric power generation caused by extreme dissipation of heat within the fuel cell module 17 and a consequent decrease in temperature of the fuel cell 3 (the cell stack 2).

The heat insulator 33 may be placed in the vicinity of the cell stack 2, and, it is particularly advisable to place the heat insulator 33 on the lateral side of the cell stack 2 so as to lie along the arrangement direction of the fuel cells 3, as well as to place the heat insulator 33 having a width which is equivalent to or greater than the width of each side of the cell stack 2 along the arrangement direction of the fuel cells 3. Moreover, the heat insulator 33 may be placed at each end of the cell stack 2 in the arrangement direction so that the cell stack 2 is sandwiched between the opposite heat insulators 33. Placing the heat insulator 33 so as to surround the cell stack 2 makes it possible to reduce a decrease in temperature of the cell stack 2 effectively, and also to restrain the oxygen-containing gas introduced by the oxygen-containing gas supply member 24 from being discharged sidewardly from the cell stack 2, thus facilitating the flow of the oxygen-containing gas between the fuel cells 3 constituting the cell stack 2. Note that the opposite heat insulators 33 disposed on the lateral side of the cell stack 2 are each provided with an opening 34 to adjust the flow of the oxygen-containing gas which is fed to the fuel cell 3 for improvement in temperature distribution in the direction of length of the cell stack 2, as well as in the fuel cell 3-stacking direction.

Moreover, inside the inner wall 25 lying along the arrangement direction of the fuel cells 3, there is provided an inner wall for exhaust gas 35, and, a region between the inner wall 25 at each side of the housing chamber 27 and the inner wall for exhaust gas 35 defines an exhaust gas passage section 36 through which an exhaust gas within the housing chamber 27 flows downwardly.

Moreover, in the lower part of the housing chamber 27 located above the oxygen-containing gas introduction section 28, there is provided an exhaust gas collecting section 37 merging with the exhaust gas passage section 36. The exhaust gas collecting section 37 communicates with a vent hole 38 formed in the bottom portion of the housing 19. Moreover, the inner wall for exhaust gas 35 is also provided on a side of the cell stack 2 with the heat insulator 33.

Thus, an exhaust gas generated during the operation of the fuel cell module 17 (on start-up, during electric power generation, and at halting) flows through the exhaust gas passage section 36 and the exhaust gas collecting section 37, and is thereafter discharged from the vent hole 38. The vent hole 38 may be formed either by cutting part of the bottom portion of the housing 19 or by placement of a tubular member at the bottom portion.

Moreover, inside the oxygen-containing gas supply member 24, there is provided a thermocouple 39 for measuring temperature near the cell stack 2. The thermocouple 39 is placed so that a temperature-measuring section 40 thereof is centered in a longitudinal direction of the fuel cell 3, as well as in the arrangement direction of the fuel cells 3.

Moreover, in the fuel cell module 17 thus constructed, for the purpose of burning excess fuel gas unused for power generation discharged through the gas flow channel 15 of the fuel cell 3 and the oxygen-containing gas, there are provided burning sections 50a and 50b, each lying in a space between the cell stack 2 and the reformer 20. The burning sections 50a and 50b allow the temperature of the fuel cell 3 to be raised and maintained. In addition, the reformer 20 located above the burning section 50a, 50b can be heated by combustion heat, wherefore a reforming reaction occurs efficiently in the reformer 20. The burning section 50a, 50b is provided with an ignition device, such as a burner or an ignition heater, to ignite excess gas for combustion.

During normal electric power-generating operation, with the above-described burning process and power generation in the fuel cell 3, the internal temperature of the fuel cell module 17 is raised to about 500°C to 800°C.

In the interest of improvement in power generation efficiency in the fuel cell 3, each flow channel through which the oxygen-containing gas flows can be configured for efficient oxygen-containing gas flow. That is, the fuel cell module 17 shown in FIG. 4 is structured for efficient flow and uniform distribution of the oxygen-containing gas which is introduced into the oxygen-containing gas introduction section 28, flows over each side of the housing chamber 27, and is introduced through the oxygen-containing gas distributing section 30 into the oxygen-containing gas supply member 24.

Meanwhile, in the housing chamber 27, there arise exhaust gases such as a fuel gas unused for power generation and a combustion gas resulting from the burning of an oxygen-containing gas and the fuel gas in the burning sections 50a and 50b. Efficient discharge of the exhaust gases out of the housing 19 permits efficient supply of an oxygen-containing gas to the fuel cell 3.

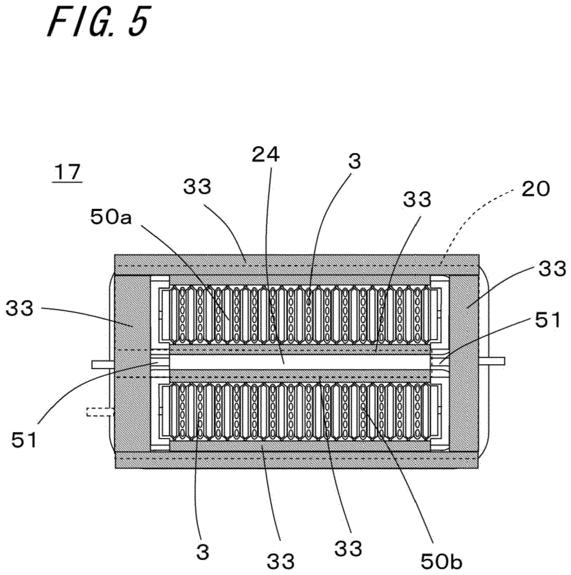

FIG. 5 is a plan view of a part taken out of the fuel cell module 17 shown in FIG. 4. In FIG. 5, the reformer 20 is transparently represented so that the burning sections 50a and 50b come into clear view. In FIG. 5, the contour of the reformer 20 is indicated by a broken line.

In the fuel cell module 17 according to the present embodiment wherein the burning sections 50a and 50b lie in two adjacent spaces, respectively, with the heat insulator 33 and the oxygen-containing gas supply member 24 between them as a partition, there is provided a communicating portion 51 which communicates between the two spaces corresponding to the burning sections 50a and 50b, respectively. In the burning sections 50a and 50b, for example, on start-up of the fuel cell module 17, the temperature is so low that burning is less likely to be started. Furthermore, even during electric power generation, the introduction of a low-temperature fuel gas or an oxygen-containing gas into the module from the outside, as well as the introduction of water into the reformer, causes a decrease in temperature, which may result in combustion misfiring. Once combustion misfiring occurs, ignition needs to be done by operating an ignition device, etc. For example, the ignition device is operated following the detection of a decrease in temperature to below a predetermined level or a drop in voltage for power generation entailed by the combustion misfiring. Once combustion misfiring occurs, a certain period of time is required for re-ignition, and, during the waiting time, the power generation efficiency remains at a low level. In this regard, for example, formation of a through hole in a part of the oxygen-containing gas supply member 24 is considered to communicate between the two adjacent burning sections. In this case, however, the oxygen-containing gas supply member 24 increases in structural complexity.

Thus, in this embodiment, at least one of the opposite ends of the cell stack 2 in the arrangement direction is provided with the communicating portion 51 comprising a communication path defined by a space surrounded with the oxygen-containing gas supply member 24, the heat insulator 33, and the reformer 20. In this way, there is provided the communicating portion 51 for communicating between the two spaces corresponding to the burning sections 50a and 50b, respectively. Hence, in one burning section 50a, even if the combustion flame becomes small to such an extent that combustion misfiring may result, or, even if combustion misfiring occurs, the combustion flame in the other burning section 50b ignites the fuel gas filled in the one burning section 50a, and this so-called flame spreading phenomenon can suppress the occurrence of combustion misfiring, or, even in the event of combustion misfiring, re-ignition can be done without the necessity of operating the ignition device. Moreover, at the time of start-up, when the other burning section 50b undergoes ignition first, the combustion flame in the other burning section 50b is conducive to occurrence of ignition in the ignition-free burning section 50a, thus achieving swift ignition.

Hence, an improvement in burning in the burning sections 50a and 50b can be achieved even if combustion misfiring occurs or there is the possibility of combustion misfiring on start-up or during electric power generation. Due to the improvement in burning of the burning sections 50a and 50b, it is possible to suppress a decrease in temperature of the cell stack 2, to provide greater heat utilization efficiency, and to increase the power generation efficiency of the fuel cell module 17.

Especially in the case of forming the communicating portion 51 at least in one of the opposite ends of the cell stack 2 in the arrangement direction so as to comprise a communication path defined by a space surrounded with the oxygen-containing gas supply member 24, the heat insulator 33, and the reformer 20, for example, the space can be created by omitting part of the heat insulators 33 or by adjusting the size of the reformer 20 or the oxygen-containing gas supply member 24. Thus, there is provided the communicating portion 51 in simple structure. The communicating portion 51 is not specifically limited in shape and size, and needs only be made as a combustion gas passage-permitting space capable of providing communication between the two spaces corresponding to the burning sections 50a and 50b, respectively.

Combustion misfiring tends to occur in the burning section located below the vaporizing section 21 of the reformer 20. This arises due to a decrease in temperature of the vaporizing section 21 caused by the supply of low-temperature water into the reformer 20, and to the susceptibility of the vaporizing section 21 to a decrease in temperature under a vaporization reaction to generate water vapor from water, which is an endothermic reaction. It is thus desirable to provide the communicating portion 51 at least in, of the opposite ends of the cell stack 2 in the arrangement direction, the end located toward the vaporizing section 21 of the reformer 20. This permits efficient ignition and re-ignition. As a matter of course, the communicating portion 51 may be disposed in each end of the cell stack 2 in the arrangement direction.

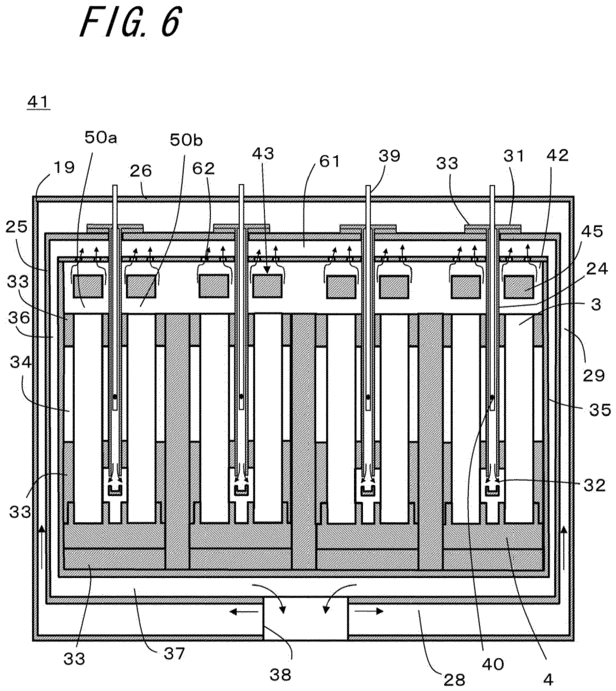

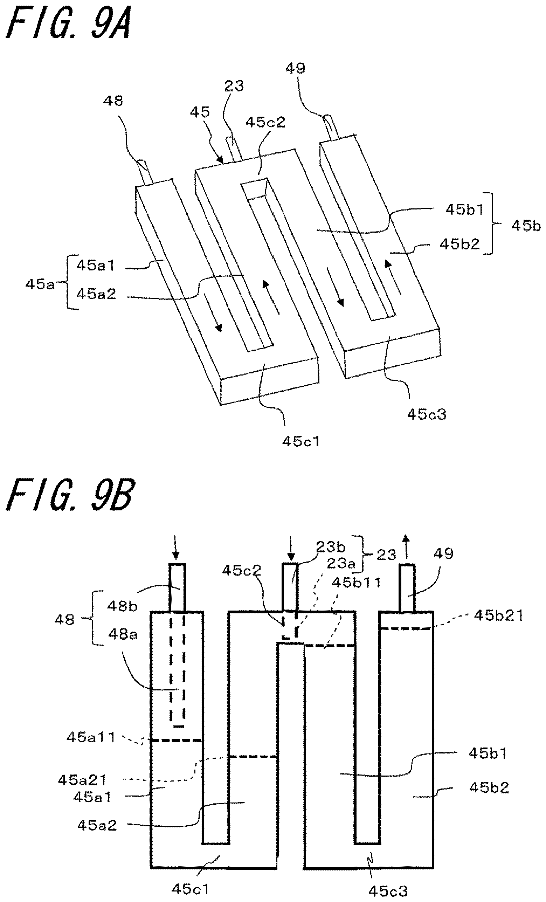

FIG. 6 is a sectional view showing another example of the fuel cell module according to the present embodiment. A fuel cell module 41 as shown in FIG. 6 differs from the fuel cell module 17 shown in FIG. 4 in that four cell stack devices 43 are housed in a housing chamber 42, that an exhaust gas collecting section 61 is disposed above the housing chamber 42 to collect exhaust gases from the fuel cell 3, that the exhaust gas collecting section 61 merges with the exhaust gas passage section 36, and that there is provided a single reformer 45 extending over the four cell stacks as shown in FIG. 9. Note that such constituent components as are common to those of the fuel cell module 17 shown in FIG. 4 will be identified with the same reference designations, and the description of the common components will be omitted.

In the case of housing the plurality of cell stack devices 43 in the housing chamber 42, the fuel cell 3 of the centrally located cell stack device 43, in particular, is located at long distance from the exhaust gas passage section 36 located on a lateral side of the housing chamber 42. As a consequence, there may be cases where exhaust gases from the fuel cell 3 of the centrally located cell stack device 43 cannot be discharged to the outside with efficiency.

Especially in the construction wherein excess fuel gas unused for power generation is burned by the burning sections 50a and 50b located above the fuel cell 3 and the resultant combustion heat is utilized to maintain the temperature of the fuel cell 3 at a high level, exhaust gases may stay above the fuel cell 3. In this case, the fuel gas unused for power generation cannot be burned successfully by the burning sections 50a and 50b, which may result in combustion misfiring. In the event of combustion misfiring, the fuel cell 3 fails to undergo a temperature rise or cannot be maintained in high-temperature conditions, which may result in a reduction in the amount of electric power generation in the fuel cell 3 (cell stack device 43).

Hence, in the fuel cell module 41 according to the present embodiment shown in FIG. 6, in addition to the above-described exhaust gas passage section 36, there is provided the exhaust gas collecting section 61 located above the housing chamber 42 to collect exhaust gases from the fuel cell 3, and the exhaust gas collecting section 61 merges with the exhaust gas passage section 36. This permits efficient discharge of exhaust gases from the fuel cell 3 to the outside. The exhaust gases from the fuel cell 3 undergoes heat exchange with an oxygen-containing gas supplied from the outside. This makes it possible to feed the oxygen-containing gas kept at an elevated temperature to the fuel cell 3, and thereby increase the power generation efficiency.

Moreover, the bottom surface of the exhaust gas collecting section 61 is provided with a collecting hole 62 merging with the housing chamber 42. Thus, the exhaust gases discharged into the housing chamber 42 flow through the collecting hole 62 to the exhaust gas collecting section 61.

The fuel cell module 41 according to the present embodiment is capable of suppressing staying of exhaust gases on the fuel cell 3 and thus achieving efficient discharge of the exhaust gases. The cell stack device 43 having the burning sections 50a and 50b located above the fuel cell 3 can suppress the occurrence of combustion misfiring, and therefore permits an improvement in the amount of electric power generation in the fuel cell module 41.

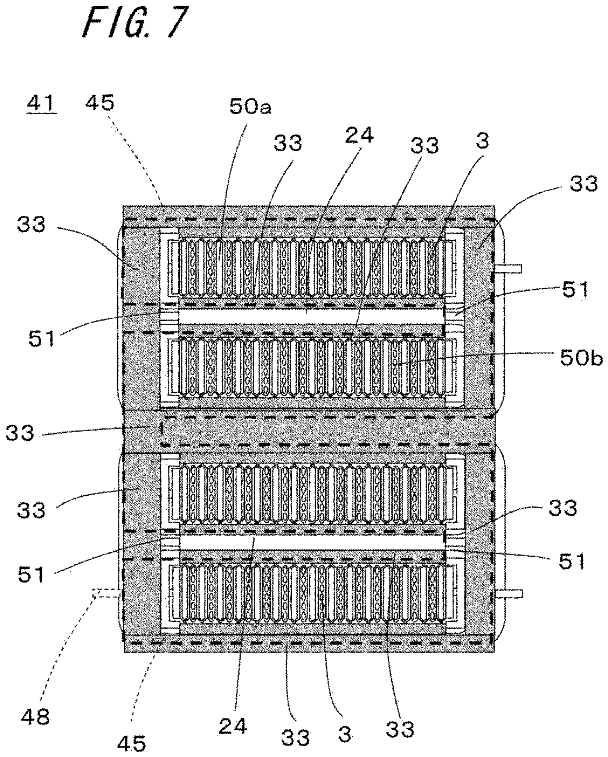

FIG. 7 is a plan view of part of the fuel cell module 41 shown in FIG. 6. While the fuel cell module 41 shown in FIG. 6 has four cell stack devices 43, FIG. 7 is a plan view showing two out of the four cell stack devices 43. In FIG. 7, the reformer 45 is transparently represented so that the burning sections 50a and 50b come into clear view. In FIG. 7, the contour of the reformer 45 is indicated by a broken line.

Like the fuel cell module 17 according to the preceding embodiment, in the fuel cell module 41 according to the present embodiment wherein the burning sections 50a and 50b lie in two adjacent spaces, respectively, with the heat insulator 33 and the oxygen-containing gas supply member 24 between them as a partition, there is provided a communicating portion 51 for providing communication between the two spaces corresponding to the burning sections 50a and 50b, respectively.

By virtue of the communicating portion 51 which communicates between the two spaces corresponding to the burning sections 50a and 50b, respectively, in one burning section 50a, even if combustion misfiring occurs, or even if the combustion flame becomes small to such an extent that combustion misfiring may result, the combustion flame in the other burning section 50b ignites the fuel gas filled in the one burning section 50a, and this flame spreading phenomenon can suppress the occurrence of combustion misfiring. Moreover, even in the event of combustion misfiring, re-ignition can be done without the necessity of operating the ignition device. In addition, at the time of start-up, when the other burning section 50b undergoes ignition first, the combustion flame in the other burning section 50b is conducive to occurrence of ignition in the ignition-free burning section 50a, thus achieving swift ignition.

Hence, an improvement in burning in the burning sections 50a and 50b can be achieved even if combustion misfiring occurs or there is the possibility of combustion misfiring on start-up or during electric power generation. Due to the improvement in burning of the burning sections 50a and 50b, it is possible to suppress a decrease in temperature of the cell stack 2, and to increase the power generation efficiency of the fuel cell module 41.

As in the case of the preceding embodiment, the communicating portion 51 is disposed at least in one of the opposite ends of the cell stack 2 in the arrangement direction so as to comprise a communication path defined by a space surrounded with the oxygen-containing gas supply member 24, the heat insulator 33, and the reformer 20. The communicating portion 51 is not specifically limited in shape and size, and needs only be made as a combustion gas passage-permitting space capable of communicating between the two spaces corresponding to the burning sections 50a and 50b, respectively. In this embodiment, for example, the space can be created by omitting part of the heat insulators 33 or by adjusting the size of the reformer 45 or the oxygen-containing gas supply member 24, wherefore the communicating portion 51 can be made in simple structure.

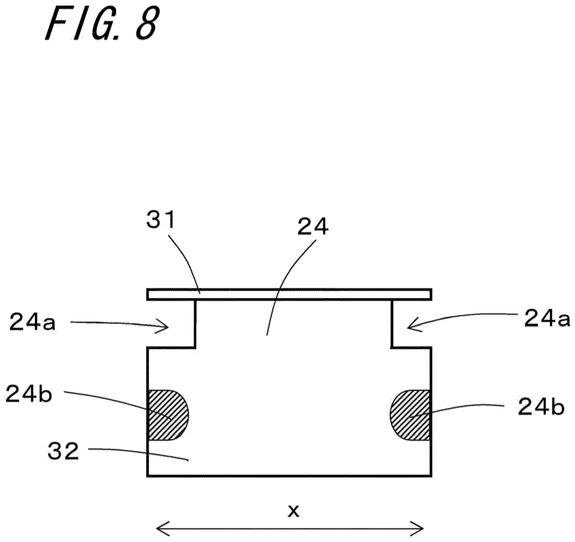

FIG. 8 is a side view of the oxygen-containing gas supply member 24, illustrating another example of the structure of the communicating portion 51. In the embodiment given above, to form the communication path of the communicating portion 51, a space serving as the communication path is created by removing part of the heat insulators 33 or by omitting the placement of the heat insulator 33. In the case shown in FIG. 8, as another example, there is provided a cutaway 24a in which the space-facing part of the oxygen-containing gas supply member 24, expressed differently, a part of the oxygen-containing gas supply member 24 which protrudes upwardly beyond the cell stack 2, is cut away in the X direction, so that there is provided the communicating portion 51 comprising a communication path in the form of a space defined by this cutaway 24a.

Since a space between the burning sections 50a and 50b is also partitioned by the oxygen-containing gas supply member 24, by forming the cutaway 24a in the oxygen-containing gas supply member 24, the cutaway portion defines a space which functions as the communication path for the burning sections 50a and 50b.

Moreover, in the case of providing the cutaway 24a in the oxygen-containing gas supply member 24, in the oxygen-containing gas supply member 24, a gas flow channel thereof located below the cutaway 24a may be blocked in part. The absence of the gas flow channel in a part of the oxygen-containing gas supply member 24 provided with the cutaway 24a, as well as the blockage in part of the gas flow channel located below the cutaway, restrains an oxygen-containing gas against smooth flow at least in each end of the gas flow channel within the oxygen-containing gas supply member 24 in the x direction. The oxygen-containing gas is a gas which is supplied from the outside and whose temperature is relatively low. The flow of the oxygen-containing gas through the gas flow channel within the oxygen-containing gas supply member 24 deprives heat due to heat exchange with the cell stack 2 adjacent to the oxygen-containing gas supply member 24, causing a decrease in temperature of the cell stack 2. The temperature distribution of the cell stack 2 in itself is such that the temperature at each end in the arrangement direction (x direction) tends to be low, and, in addition to that, the flow of the oxygen-containing gas causes further temperature drop. A decrease in temperature of the cell stack 2 may result in a reduction in the amount of electric power generation or occurrence of combustion misfiring in the burning sections 50a and 50b. In this regard, due to the blockage in part of the gas flow channel located below the cutaway 24a, it is possible to suppress a decrease in temperature at each end of the cell stack 2, to suppress the occurrence of combustion misfiring, and to increase the power generation efficiency.

In the oxygen-containing gas supply member 24, the space between two flat plates serves as an oxygen-containing gas flow channel, wherefore a blockage may be produced in the flow channel by, for example, denting each of the two flat plates in the thickness direction thereof below the cutaway 24a for space elimination. In FIG. 8, a blockage portion 24b is provided below the cutaway 24a.

Although the blockage portion 24b is formed as a blockage in the flow channel by deforming the flat plate under the cutaway 24a in the above-described example, the formation procedure thereof is not limited to this, and the blockage portion 24b may thus be formed by filling in the space between the flat plates below the cutaway 24a. In this case, due to a member used to fill in the space being exposed to an oxygen-containing gas, as the space-filling member, it is possible to use a member which does not react with the oxygen-containing gas, and can be fixedly attached to the inner surface of the flat plate.

The communication path included in the communicating portion 51 as described above needs only be made as a space capable of communicating between the two burning sections 50a and 50b, and may therefore be obtained not only by removing the heat insulator 33 or omitting the placement of the heat insulator 33 but also by forming the cutaway 24a in the oxygen-containing gas supply member 24 as practiced in this embodiment. In the alternative, the communication path may be obtained by the combined use of a space created by removing the heat insulator 33 or omitting the placement of the heat insulator 33 and a space created by forming the cutaway 24a in the oxygen-containing gas supply member 24.

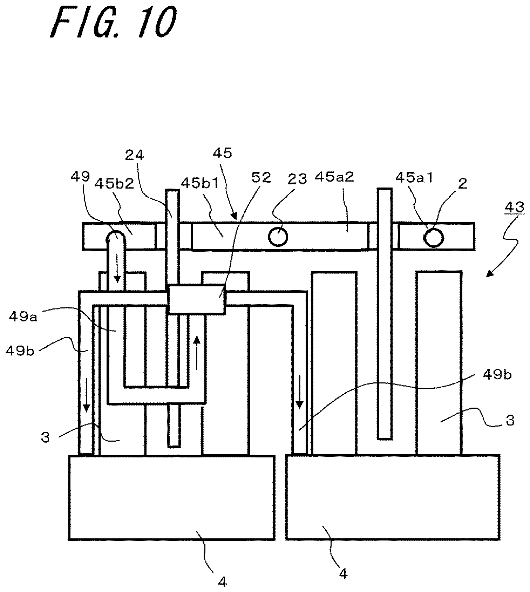

FIG. 9 shows the reformer 45 taken out of the fuel cell module 41 shown in FIG. 6 in which the reformer is housed, wherein FIG. 9A is a perspective view thereof and FIG. 9B is a plan view thereof. FIG. 10 is a schematic view of an example of a construction in which the reformer 45 shown in FIG. 9 is disposed above the cell stack device 43, as seen in the arrangement direction.

In the fuel cell module 41 shown in FIG. 6, the W-shaped reformer 45 (in meandering form) is disposed above four cell stacks 2.

As shown in FIGS. 9A and 9B, the reformer 45 comprises: a vaporizing section 45a for generating water vapor by vaporizing water; and a reforming section 45b for performing steam reforming on a raw fuel with use of the water vapor generated by the vaporizing section 45a.

The vaporizing section 45a comprises: a vaporizing section forward path 45a1 in tubular form through which water vapor flows from one end to the other end thereof; and a vaporizing section backward path 45a2 in tubular form through which water vapor flows from the other end to one end thereof. Moreover, the vaporizing section forward path 45a1 comprises a cylindrical portion 48 protruding inwardly along the vaporizing section forward path 45a1 from one end thereof, and a water supply portion 48b connected to the one end to feed water to the cylindrical portion 48a from the outside. The internal cylindrical portion 48a may be configured to protrude inwardly from a tubular body constituting the vaporizing section 45a, and to connect a water supply tube serving as the water supply portion 48b to this cylindrical portion 48a. A water supply tube 48 may be inserted into the tubular body from the outside, and, the exteriorly exposed part of the water supply tube 48 may serve as the water supply portion 48b, whereas the inserted part thereof may serve as the cylindrical portion 48a. The following description deals with the case of inserting the water supply tube 48 into the tubular body from the outside.

Moreover, the reforming section 45b comprises: a reforming section forward path 45b1 through which a reformed gas flows from one end to the other end thereof, the reformed gas being generated by reforming a raw fuel supplied via the raw fuel supply tube 23 serving as a raw fuel supply section; and a reforming section backward path 45b2 through which the reformed gas flows from the other end to one end thereof. A reformed gas lead-out tube 49 for leading out the reformed gas is connected to the reforming section backward path 45b2. In the reformer 45 shown in FIG. 9, the water supply tube 48, the raw fuel supply tube 23, and the reformed gas lead-out tube 49 are each connected to one end of the reformer 45.

Moreover, in the reformer 45, the other end of the vaporizing section forward path 45a1 and the other end of the vaporizing section backward path 45a2 are coupled by a coupling path 45c1 (hereafter referred to as "vaporizing section coupling path"). In addition, one end of the vaporizing section backward path 45a2 and one end of the reforming section forward path 45b1 are coupled by a coupling path 45c2 (hereafter referred to as "vaporizing/reforming section coupling path"). Further, the other end of the reforming section forward path 45b1 and the other end of the reforming section backward path 45b2 are coupled by a coupling path 45c3 (hereafter referred to as "reforming section coupling path). The vaporizing section forward path 45a1, the vaporizing section backward path 45a2, the reforming section forward path 45b1, and the reforming section backward path 45b2 are juxtaposed so as to face their side surfaces.

In the reformer 45, water supplied to the vaporizing section forward path 45a1 becomes water vapor, and the water vapor flows through the vaporizing section coupling path 45c1, the vaporizing section backward path 45a2, the vaporizing/reforming section coupling path 45c2, and the reforming section forward path 45b1 one after another in the order named. Moreover, the raw fuel supply tube 23 is inserted into the vaporizing/reforming section coupling path 45c2, and, the exteriorly exposed part of the raw fuel supply tube 23 serves as a raw fuel supply section 23b, whereas the inserted part of the raw fuel supply tube 23 serves as a cylindrical portion 23a.

Upon the supply of a raw fuel from the raw fuel supply section 23b, the raw fuel is introduced into the vaporizing/reforming section coupling path 45c2 through the cylindrical portion 23a, is mixed with water vapor there, flows through the reforming section forward path 45b1, the reforming section coupling path 45c3, and the reforming section backward path 45b2 while undergoing a reforming reaction to generate a reformed gas containing hydrogen (a fuel gas), and is led out in the form of the fuel gas from the reformed gas lead- tube 49.

The vaporizing section forward path 45a1, the vaporizing section backward path 45a2, the reforming section forward path 45b1, the reforming section backward path 45b2, the vaporizing section coupling path 45c1, the vaporizing/reforming section coupling path 45c2, and the reforming section coupling path 45c3 are each composed of a tubular body having a rectangular cross-sectional profile.

Moreover, partition plates 45a11 and 45a21 for partitioning the flow channel are disposed in the vaporizing section forward path 45a1 and the vaporizing section backward path 45a2, respectively, and, a region between these partition plates 45a11 and 45a21 defines a vaporizing chamber. The cylindrical portion 48a of the water supply tube 48 extends to a location near the upstream side of the partition plate 45a11 to deliver water to a location just ahead of the vaporizing chamber. A ceramic ball is housed in the vaporizing chamber to facilitate vaporization, and yet, the partition plates 45a11 and 45a21, while being pervious to water vapor, do not permit the passage of the ceramic ball therethrough. The arrangement of the partition plates 45a11 and 45a21 may be suitably changed depending upon the structure of the reformer, the structure of the cell stack, etc.

Further, partition plates 45b11 and 45b21 for partitioning the flow channel are disposed in the reforming section forward path 45b1 and the reforming section backward path 45b2, respectively, and, the reforming section forward path 45b1, the reforming section coupling path 45c3, and the reforming section backward path 45b2 which are located between the partition plates 45b11 and 45b21 define a reforming chamber. A reforming catalyst is housed in the reforming chamber. The partition plates 45b11 and 45b21, while being pervious to a gas such as water vapor, a raw fuel, a reforming gas, etc., is made impervious to the reforming catalyst. The arrangement of the partition plates 45b11 and 45b21 may be suitably changed depending upon the structure of the reformer, the structure of the cell stack, etc.

In such a reformer 45, the raw fuel supply tube 23 which supplies a raw fuel is inserted into the vaporizing/reforming section coupling path 45c2 located between the vaporizing section 45a and the reforming section 45b. In such a reformer 45, since the raw fuel supply tube 23 is connected to the vaporizing/reforming section coupling path 45c2 located downstream from the vaporizing section forward path 45a1 connected with the water supply tube 48, a water supply point and a raw fuel supply point are located through a space between the tubular body constituting the vaporizing section forward path 45a1 and the tubular body constituting the vaporizing section backward path 45a2. Moreover, in terms of the direction in which water vapor flows, a length in the flowing direction is long. Hence, even if a raw fuel is of a low temperature, at a point of time when an additional raw fuel is mixed, most of the supplied water has been vaporized, and thus it is possible to suppress a decrease in temperature of part of the reformer 45 (the vaporizing section forward path 45a1). This makes it possible to increase the reforming efficiency.

Then, as shown in FIG. 10, the reformed gas (fuel gas) generated by the reformer 45 is led out from the reformed gas lead-out tube 49, is thereafter fed to two manifolds 4, and is fed through each manifold 4 to the gas flow path within the furl cell 3.

As shown in FIG. 10, the reformed gas generated by the reformer 45 is led out from the reformed gas lead-out tube 49, and is divided into two portions by a distributor 52, and, each gas portion is fed to corresponding one of the two manifolds 4. That is, the reformed gas lead-out tube 49 comprises: a U-shaped first reformed gas lead-out tube 49a extending from the reformer 45 to the distributor 52; and two second reformed gas lead-out tubes 49b, each extending downwardly from the distributor 52 to corresponding one of the two manifolds 4. For the purpose of feeding the reformed gas to the manifolds 4 uniformly, the two second reformed gas lead-out tubes 49b have the same length to result in the same pressure loss.

In the reformer 45 thus constructed, since water is introduced into the water supply tube 48 from the outside, in the burning sections 50a and 50b, a considerable temperature decrease occurs in the vicinity of the water supply tube 48, and combustion misfiring tends to occur. It is thus desirable to provide the communicating portion 51 at least in, of the opposite ends of the cell stack 2 in the arrangement direction, the end located on the side of the water supply tube 48 serving as a water introduction section. The placement of the communicating portion 51 on the combustion misfiring-prone side makes it possible to prevent combustion misfiring more reliably.

In the reformer 45, the vaporizing section forward path 45a1, the vaporizing section backward path 45a2, the reforming section forward path 45b1, and the reforming section backward path 45b2 are each disposed above corresponding one of the four cell stacks 2. The burning sections 50a and 50b lie the spaces between the respective cell stacks 2 and the vaporizing section forward path 45a1, the vaporizing section backward path 45a2, the reforming section forward path 45b1, and the reforming section backward path 45b2. This arrangement allows each of the vaporizing section forward path 45a1, the vaporizing section backward path 45a2, the reforming section forward path 45b1, and the reforming section backward path 45b2 to be heated efficiently.

Moreover, other structural features (for example, the positions of the water supply tube 48, the partition plate, etc.) may be suitably changed on an as needed basis without being limited to the foregoing.

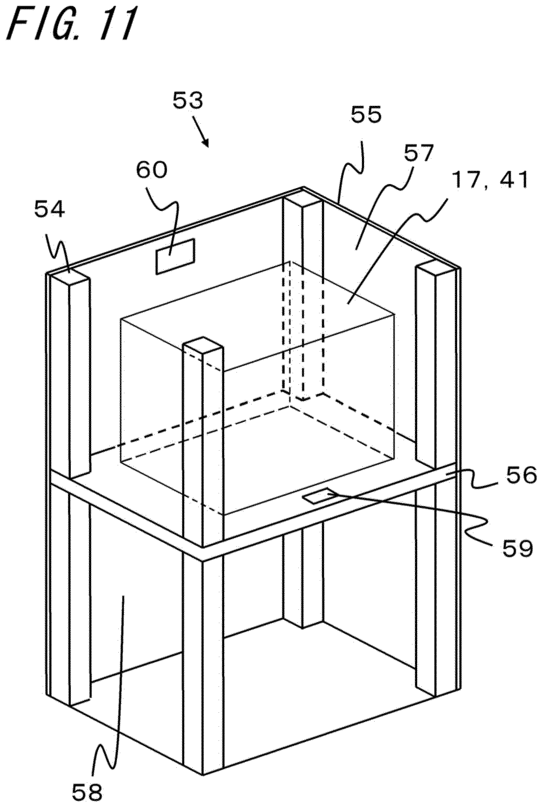

FIG. 11 is a perspective view showing an example of a fuel cell apparatus 53 configured so that any one of the fuel cell modules 17 and 41, and auxiliaries for operating each fuel cell module are housed in an exterior case. In FIG. 10, part of the construction is omitted.

In the fuel cell apparatus 53 shown in FIG. 10, the interior of the exterior case composed of supports 54 and exterior plates 55 is divided into an upper space and a lower space by a partition plate 56, the upper space defining a fuel cell module housing chamber 57 for housing therein the above-described fuel cell module 17, 41, the lower space defining an auxiliary housing chamber 58 for housing therein auxiliaries for operating each fuel cell module. The auxiliaries housed in the auxiliary housing chamber 58 are not shown in the drawing.

Moreover, the partition plate 56 is provided with an air passage port 59 for allowing air present in the auxiliary housing chamber 58 to flow toward the fuel cell module housing chamber 57, and, part of the exterior plate 55 constituting the fuel cell module housing chamber 57 is provided with an air outlet 60 for ejecting air present in the fuel cell module housing chamber 57 to the outside.

In such a fuel cell apparatus 53, any one of the above-described fuel cell modules 17 and 41 are housed in the exterior case, and hence the fuel cell apparatus 53 which achieves an improvement in power generation efficiency can be realized.

Although the invention has been described in detail, it is understood that the invention is not limited to the embodiments as described heretofore, and various changes, modifications, and improvements are possible without departing from the scope of the invention. The foregoing embodiments will be considered in all respects as illustrative only, and the scope of the invention is not to be restricted by the body of the specification but to be shown as the scope of the appended claims. Moreover, all such changes and modifications as fall within the scope of the claims are considered as coming within the scope of the invention.

For example, although the fuel cell module 41 according to the above-described embodiment has been illustrated as comprising the cell stack device constructed by disposing two reformers 45 above four cell stacks 2, for example, the cell stack device may be constructed by disposing a single reformer above a single cell stack 2, or three or more cell stacks 2. In this case, the form of the reformer may be suitably changed on an as needed basis.

Moreover, although the arrangement wherein two cell stacks 2 are placed on a single manifold 4 has been illustrated, a single cell stack 2 may be placed on a single manifold 4, or three or more cell stacks 2 may be placed on a single manifold 4.

In addition, although the case using the fuel cell 3 of so-called longitudinal stripe configuration has been illustrated, it is possible to use a segmented-in-series fuel cell stack comprising a plurality of power-generating element portions of so-called circumferential stripe configuration disposed on a support.

### Reference Signs List

- 2:: Cell stack
- 3:: Fuel cell
- 17, 41:: Fuel cell module
- 19:: Housing
- 20, 45:: Reformer
- 24:: Oxygen-containing gas supply member
- 24a:: Cutaway
- 24b:: Blockage portion
- 33:: Heat insulator
- 50a:: Burning section
- 50b:: Burning section
- 51:: Communicating portion
- 53:: Fuel cell apparatus

## Claims

1. A fuel cell module, comprising:
a housing;
a plurality of cell stacks which are housed in the housing, the plurality of cell stacks being disposed in juxtaposition, each of the cell stacks comprising a plurality of fuel cells which each have a columnar shape and are arranged along a predetermined arrangement direction;
a reformer disposed above the cell stacks in the housing, the reformer generating a fuel gas which is supplied to the fuel cells;
a gas supply section disposed between the adjacent cell stacks along the predetermined arrangement direction of the fuel cells so as to face the cell stacks and the reformer, the gas supply section having a gas flow channel through which an oxygen-containing gas to be supplied to the fuel cell flows downwardly;
heat insulators disposed on both end sides in an arrangement direction of the cell stacks so that the cell stacks are sandwiched between the heat insulators;
a burning section lying in corresponding one of spaces each located between the cell stacks and the reformer, the burning section burning excess fuel gas discharged from the fuel cell;
a communicating portion which communicates between the adjacent spaces, the communicating portion being disposed in at least one end of each of the cell stacks in the predetermined arrangement direction so as to be surrounded with the gas supply section, the heat insulators, and the reformer.

2. The fuel cell module according to claim 1, wherein the communicating portion comprises a cutaway in which a part of the gas supply section which faces each of the spaces is cut away in the predetermined arrangement direction.

3. The fuel cell module according to claim 2, wherein the gas flow channel located below the cutaway is blocked in part.

4. The fuel cell module according to any one of claims 1 to 3, wherein the reformer is configured so that steam reforming can be performed, and is connected with a water introduction section which introduces water into the reformer, and
the communicating portion is located on a water introduction section side.

5. A fuel cell apparatus, comprising:
the fuel cell module according to any one of claims 1 to 4; and
an exterior case which houses therein the fuel cell module.
